# EUROPEAN PATENT APPLICATION

(11) **EP 3 467 226 A1**
(43) Date of publication of application: **10.04.2019**
(21) Application number: 17195474.6
(22) Date of filing: 09.10.2017
(51) Int. Cl.: E04B 5/02, E04B 5/04, E04B 5/40, B28B 19/00, E04C 2/32, E04C 2/28

(54) **COMPOSITE BUILDING ELEMENTS**

(71) Applicant: HeidelbergCement AG, 69120 Heidelberg (DE)
(72) Inventor: SKOCEK, Jan, 69181 Leimen (DE); ZAJAC, Maciej, 69126 Heidelberg (DE); BEN HAHA, Mohsen, 69117 Heidelberg (DE)
(74) Representative: Zellentin & Partner mbB Patentanwälte

(57) **Abstract**

The present invention provides a composite building element, preferably a composite deck (1), comprising a profiled and perforated aluminum sheet (2) combined with a concrete (3) based on a carbonation hardening binder, as well as a method of manufacturing a composite building element, preferably a composite deck (1), comprising the steps of providing a profiled and perforated aluminum sheet (2), providing a concrete paste from a carbonation hardening binder, pouring the concrete paste onto the aluminum sheet (2) and hardening the concrete (3) by subjecting the paste to carbon dioxide.

## Description

The present invention relates to composite building elements, preferably composite decks and their manufacturing.

Composite materials are defined to include at least two materials differing in physical and/or chemical properties which are combined to provide a material with characteristics different from the individual components. The individual components remain separate and distinct within the end product while their combination provides a material with other properties than the those of the combined materials. Examples in the building sector are sandwich panels, reinforced concrete and composite steel decks.

A composite steel deck combines the tensile strength of steel with the compressive strength of concrete to improve design efficiency and reduce the material necessary to cover a given area. Additionally, composite steel decks can span greater distances between supporting elements and have reduced live load deflection in comparison to previous construction methods.

Composite steel decks are in widespread use to form composite floors, which are constructed by first placing the steel deck, on which subsequently concrete is poured. The steel deck usually has been profiled from a flat sheet in a trapezoidal shape, which may be supplemented by dovetail-formed portions. The main design characteristic for the profiled sheet is to provide sufficient stiffness and strength to enable the concrete decking to be poured in situ.

After curing of the concrete the main purpose of the steel deck is to assimilate the tensile forces which are the result of the mass of the composite floor and the loads applied to the floor. The function of the concrete is to provide sufficient compression strength to counterbalance the weight of the floor and the applied loads, as well as to provide the required resistance to fire.

It is further known to provide holes in the steel deck, which improve acoustics in a room below the composite steel deck.

One drawback of composite steel decks is the huge energy consumption of concrete, which is associated with considerable carbon dioxide emissions. The common binder in concrete is Portland cement (OPC) or Portland composite cement. Many proposals have been made in recent years to decrease energy consumption, foremost several alternative cements that can be made at lower temperature, see Gartner et al., "A review of alternative approaches to the reduction of CO2emissions associated with the manufacture of the binder phase in concrete", Cement and Concrete research (2015), pages 126 - 142. However, these alternative cements mostly fail to protect steel from corrosion, lacking the strongly basic pH of OPC, see e.g. U. Nürnberger, "Corrosion of metals with mineral building materials", Otto-Graf-Journal (2001) pages 69 - 80.

It has also been suggested to replace hydrating cement as a binder with materials that harden by reaction with carbon dioxide, see e.g. DeCristofaro et al., "Curing concrete with carbon", Concrete Engineering International (2014), pages 32 - 34. While this is a big advantage for carbon dioxide balance, such binders often take too long to gain the needed strength. The necessary access of carbon dioxide limits element thickness and/or requires a porous microstructure. This limits applicability of carbonation hardening binders to load bearing elements and constructions. Moreover, these binders also show a too low pH to passivate steel.

Thus, there still is the object to provide improved materials that have less negative impact on the environment while properties like compressive and flexural strength are maintained and that avoids delays in construction processes as far as possible.

Surprisingly it has now been found that using perforated aluminum sheets allows to obtain composite metal decks and other building elements from carbonation hardening binders within acceptable times and with appropriate strength. Therefore, the above object is solved by a composite building element, preferably a composite deck, comprising a profiled and perforated aluminum sheet combined with a concrete based on a carbonation hardening binder. The object is also solved by a method of manufacturing a composite building element, preferably a composite deck, comprising the steps of providing a profiled and perforated aluminum sheet, providing a concrete paste from a carbonation hardening binder, pouring the concrete onto the sheet and hardening the concrete by subjecting the paste to carbon dioxide.

The perforated aluminum sheet functions as mould simplifying the production process since no consolidation, pre-hardening, green strength, demoulding etc. are needed. The range of possible materials for the carbonation hardening concrete is extended. The perforation facilitates carbon dioxide ingress to the concrete. The external reinforcement is more efficient than internal reinforcement since the arm between concrete in compression and metal sheet increases with tension. The obtained building elements are resistant to corrosion over long periods of time even in marine environments. Aluminum is highly malleable, allowing an easy manufacturing process of complex, perforated profiles. The costs are not higher, since aluminum sheets can be thinner thereby compensating the higher material price per weight unit.

The perforated aluminum sheet provides the same function as the steel sheet in composite decks of the prior art, i.e. it acts as stay-in-place formwork and assimilates the tensile forces. The profile can be any of the known profiles, for example but not exclusively trapezoidal, re-entrant, with corrugations and/or ridges, dove tailed and even more complicated. Numerous improvements of the shape have been discussed, see e.g. US 2010/0297466 A1 and EP 1 767 711 A1. The profile of aluminum sheet used according to the invention is not restricted in any way. But in contrast to the steel sheets it has to be perforated to allow sufficient and fast access of carbon dioxide to the concrete. Typically, the perforations make up at least 20 % of the surface, preferably at least 30 % and most preferred at least 40 %. The upper limit is determined by the necessary structural integrity needed to assimilate the tensile forces, typically not more than 80 % preferably not more than 70 % and most preferred not more than 65 % of the surface are made up by the perforations. These numbers are average figures since perforations might be and mostly are distributed non-uniformly over the surfaces. Typically, the perforated area will be higher in flat parts of the sheet while the vicinity of bends and the bends will be non-perforated. Also ribs, edges and their vicinity typically have a lower perforated area or are not perforated. The perforations might vary across the span of the deck as well, reflecting the variation of the tensile stress the sheet transfers. Optimally, zones with higher tensile stress will be less perforated than zones with lower load. The thickness of the sheet might vary as well to further optimize its load bearing capacity. The size of the perforations is usually chosen lower than the size of the smallest aggregate such that the paste does not flow out due to its cohesive forces.

In a manner known per se the perforations can be made by punching the aluminum sheet and the punched surfaces may remain connected with the sheet to form protrusions increasing grip between sheet and concrete.

The aluminum sheet can be used as one-sided reinforcement or surround the building element completely (except at the openings for pouring the concrete paste).

In a preferred embodiment the building element contains inner channels from perforated aluminum sheet. This reduces weight and concrete demand and also accelerates hardening due to the additional contact surface for the carbon dioxide. The channels can be formed with any cross section, for example round, oval, triangular, rectangular, square, pentagonal, hexagonal, rhomboidal, polygonal and any overlap of these shapes. An adaptation to the outer form is preferred to provide a constant minimum thickness of the concrete.

As usual the aluminum sheet can be provided with shear studs, preferably from aluminum or otherwise corrosion resistant. Their size, spacing and number solely depends on the detailing and the required load bearing capacity and is adjusted in a manner know per se from steel composite decks.

The concrete may comprise a reinforcement, also preferably from aluminum or glass or plastic. Further, fibre reinforcement can be advantageous, again with materials that are not corroding.

According to the invention the concrete is based on a carbonation hardening binder. Such binders have been proposed for example in US 8,114,367 B2, US 2006/0185560 A1, US 2013/0112115 A1, WO 2017/005350 A1, US 8,367,025 B2, US 2012/0312194 A1 and EP 2 511 003 A1 and can all be used. Typically, but not limited to, the suitable concrete contains between 200 kg/m³ to 1000 kg/m³ of binder hardening by carbonation, preferably between 220 and 800 kg/m³, more preferable between 250 and 600 kg/m³. The remaning part constituting water, fine and coarse aggregates, additives and admixtures. Water to cement ratio is chosen to meet the strength and workability requirements, typically in a range of 0.2 to 1.0, preferably betweem 0.3 and 0.6, more preferably betweem 0.35 and 0.55. Common sand and aggregates used for normal concrete are suitable. Admixtures are selected from

In one embodiment, the binder shows a dual hardening behavior, i.e. it contains a substantial amount of at least 20 % by weight, preferably at least 30 % by weight, of hydraulically reactive phases. These initially react with water to form one or more of calcium silicate hydrates, calcium aluminate hydrates, aluminate silicate hydrates, AFm, ettringite etc. in the ususal manner. However, the water/binder ratio is selected low and/or water is removed by drying well before hydration is complete. The ultimate strength is then provided by subjecting the partly reacted binder to carbonation. Low water content and drying result in a self-desiccation of the binder that provides a suitable porosity for carbonation. Useful binders for this are described in the co-filed applications EP 17195448.0 "Building elements made from binders hardening by combined hydration and carbonation" and EP 17195454.8 "Method for manufacturing binders hardening by hydration and carbonation" both of which are incorporated by reference herewith. Accordingly, either a binder based on ternesite dicalcium silicate calcium sulphoaluminate cement (BCT) or ternesite dicalcium silicate calcium sulphoaluminate ferrite cements (TBF) or a binder made by partial burning of raw materials with a Ca/Si molar ratio of 0.5 to 1.8 and containing up to 30 % by weight of other elements than Ca and Si calculated as oxides at a temperature in the range from 600 to 1200 °C is used. In both cases that binder would not develop sufficient strength through hydration alone, at least not at ambient conditions and within acceptable times. But the hydration is able to provide setting and also some hardening and - which is most important - a structure that at least after drying has a suitable porosity for fast and efficient carbonation.

The method according to the invention provides cost effective and versatile building elements with a lower carbon dioxide footprint than comparable elements from OPC or Portland composite cements.

According to the method an aluminum sheet with appropriate profile and perforations is provided. Due to the higher malleability of aluminum compared to steel also complicated profiles are easily manufactured. The sheet is lighter than a conventional steel sheet with the same mechanical properties, compensating the higher costs of aluminum per unit weight. As explained, the perforations occupy typically from 20 to 80 % of the surface to allow carbon dioxide ingress while maintaining structural integrity and mechanical properties of the sheet.

The concrete paste to be poured onto or into the aluminum sheet is made up from a carbonation hardening binder as described above. To this end, the binder and other desired components in the selected quantities are mixed thoroughly and cast onto or into the profiled aluminum sheet. The sheet forms a stay-in-place mould and outer reinforcement.

The cast concrete is cured by carbonation, typically within 1 hour to 2 days depending on the binder used, CO₂ pressure, temperature, thickness and the strength required. The aluminum sheet and the preferably used channels provide fast and direct contact of carbon dioxide with the concrete paste. If desired a carbon dioxide enriched atmosphere with or withouth increased pressure can be provided to accelerate hardening. Useful carbon dioxide rich gases are e.g. exhaust gases from combustion processes like coal fired power plants, waste incinerating plants, and cement rotary kilns. An incresase in temperature can also enhance strength development. Whether or not pressure and/or increased temperature is applied depends on the dimensions of the building element and acceptable investment.

In one preferred embodiment the building element made is a composite deck. In another preferred embodiment the building element is a wall. Similar as for steel decks and pre-cast concrete slabs, walls and concrete goods the load bearing capacity is chosen to meet requirements, for example by adjusting sheet profile, thickness and perforation area and concrete thickness. Typical building elements according to the invention besides composite decks are beams, hollow pipes, frames, columns, walls and panels with insulation, as well as modular walls and elements that are later filled with conventional (reinforced) concrete, i.e. the element serves as mould with an extra load bearing function.

The invention will be illustrated further with reference to the attached figures, without restricting the scope to the specific embodiments described. The invention further includes all combinations of described and especially of preferred features that do not exclude each other. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a compositin does not comprise a particular material, i.e. the compostion comprises 0 weight percent of such material.

In the figures
Fig. 1 shows a section of a first composite deck according to the invention
Fig. 2 shows a section of a second composite deck
Fig. 3 shows a section of a third composite deck
Fig. 4 shows a section of a fourth composite deck
Fig. 5 shows a section of a fifth composite deck
Fig. 6 shows a section of a sixth composite deck
Fig. 7 shows a section of a wall element.

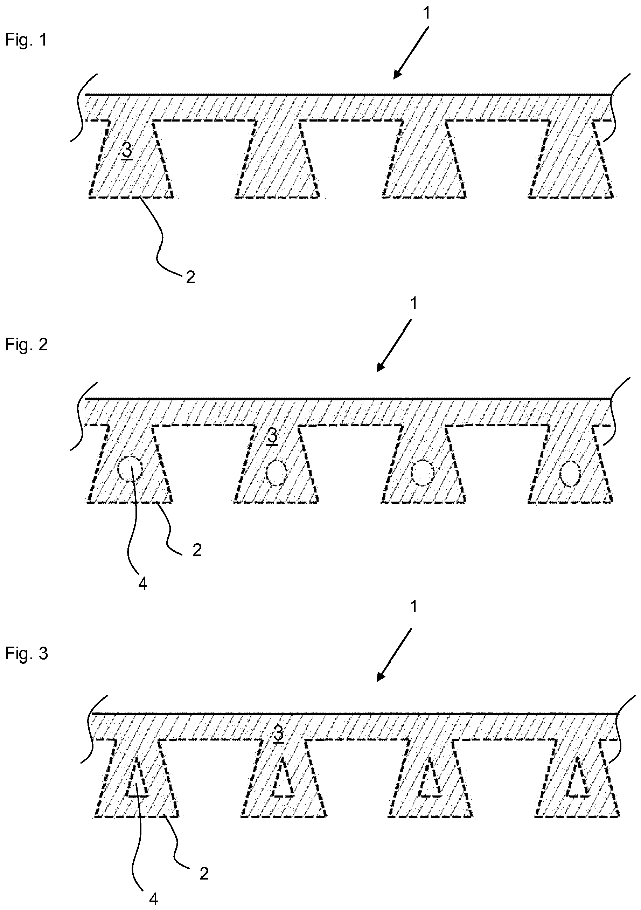

The composite deck 1 in Fig. 1 is made from a re-entrant aluminum sheet 2 filled with concrete 3. The perforations in the sheet 2 are indicated by it being shown as a dashed line. The solid line on top of the concrete 3 is the surface of the finished concrete. The sheet 2 in Fig. 1 forms a one-sided reinforcement.

The composite deck 1 in Fig. 2 comprises the same aluminum sheet 2 as that in Fig. 1. Additionally, channels 4 are formed from perforated aluminum round hollow profiles in parallel to the profiling of the sheet 2. These channels 4 diminish weight of the deck 1 and increase carbon dioxide ingress into the concrete 3.

Fig. 3 shows a third composite deck 1, that also comprises an aluminum sheet 2, concrete 3 and channels 4. The channels 4 are made from triangular hollow aluminum profiles in this embodiment. This provides a bigger weight reduction and even more increase of carbon dioxide ingress.

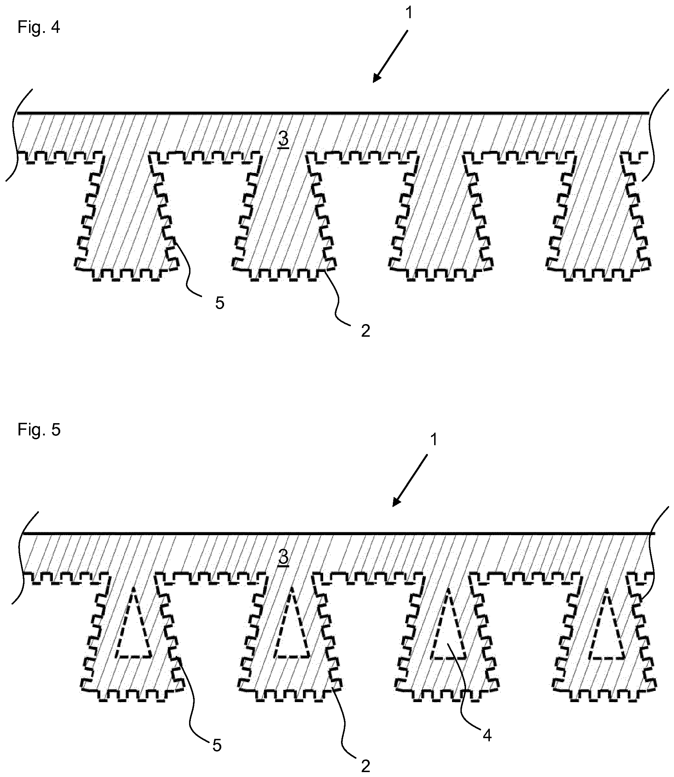

The composite deck 1 in Fig. 4 has an improved aluminum sheet 2 with projecting ridges 5 that increase the surface and provide a substantially tighter grip between sheet 2 and concrete 3. The deck 1 in Fig. 5 additionally has channels 4 made from triangular hollow aluminum profiles.

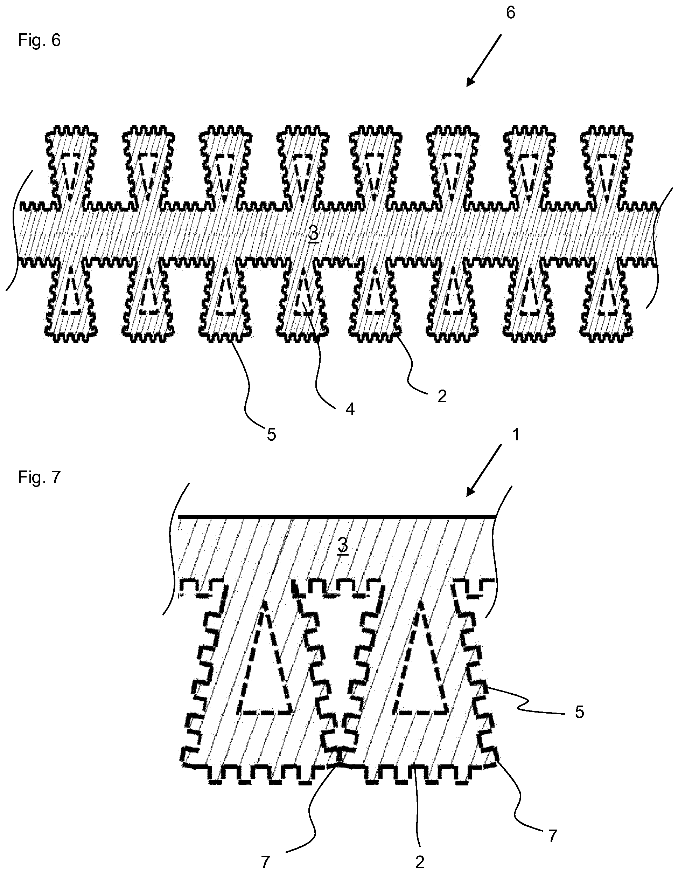

Fig. 6 shows a section of a wall element 6 according to the invention. The mould and reinforcement is provided by two aluminum sheets 2 as shown in Fig. 5, which are arranged opposite each other. The concrete 3 is poured into the space between the sheets 2 from one or both ends.

In Fig. 7 a composite deck 1 is shown, where the aluminum sheet 2 has profiling abutting each other along the edges 7. This element is especially strong after filling with concrete 3.

### Reference numbers

- 1: composite deck
- 2: profiled, perforated aluminum sheet
- 3: concrete
- 4: channel
- 5: protruding ridge
- 6: wall element
- 7: edge

## Claims

1. Composite building element, preferably a composite deck (1), comprising a profiled and perforated aluminum sheet (2) combined with a concrete (3) based on a carbonation hardening binder.

2. Composite building element according to claim 1, **characterized in that** a perforated area of the aluminum sheet (2) ranges from 20 to 80 %, preferably from 30 to 70 % and most preferred from 40 to 65 % of the total aluminum sheet area.

3. Composite building element according to claim 1 or 2, **characterized in that** the perforated area of the aluminum sheet (2) is non-uniformly distributed, being higher in flat parts and lower to zero at bends, ribs, edges, and in their vicinity.

4. Composite building element according to one of claims 1 to 3, **characterized in that** perforations are provided by punching and the punched area remains connected with the aluminum sheet (2) forming protrusions.

5. Composite building element according to one of claims 1 to 4, **characterized in that** the aluminum sheet (2) provides a one sided reinforcement.

6. Composite building element according to one of claims 1 to 4, **characterized in that** the aluminum sheet (2) provides a closed mould surrounding the building element except at one or more openings for pouring the concrete paste.

7. Composite building element according to one of claims 1 to 6, **characterized in that** the building element contains inner channels (4) formed by additional perforated aluminum sheet, preferably with a cross section that is round, oval, triangular, rectangular, square, pentagonal, hexagonal, rhomboidal, polygonal and any overlap of these shapes.

8. Composite building element according to one of claims 1 to 7, **characterized in that** the aluminum sheet (2) comprises shear studs.

9. Composite building element according to one of claims 1 to 8, **characterized in that** the concrete (3) comprises reinforcement, preferably from aluminum, glass or plastic, and/or reinforcing fibers, preferably from aluminum, glass or plastic.

10. Composite building element according to one of claims 1 to 9, **characterized in that** the building element is a composite deck (1), a beam, a hollow pipe, a frame, a column, a wall, a panel with insulation, a modular wall or an element forming a load bearing mould fillable with conventional (reinforced) concrete.

11. Method of manufacturing a composite building element, preferably a composite deck (1), comprising the steps of providing a profiled and perforated aluminum sheet (2), providing a concrete paste from a carbonation hardening binder, pouring the concrete paste onto the aluminum sheet (2) and hardening the concrete (3) by subjecting the paste to carbon dioxide.

12. Method according to claim 11, **characterized in that** the binder contains carbonated and hydrated phases stable at pH lower than 11 and unreacted parts of the original binder.

13. Method according to claim 11, **characterized in that** the binder contains at least 20 % hydraulically reactive phases that react hydraulically to form one or more of calcium silicate hydrates, calcium aluminate hydrates, aluminate silicate hydrates, AFm, ettringite and are subjected subsequently to carbonation.

14. Method according to one of claims 11 to 13, **characterized in that** carbonation is carried out with increased CO₂ pressure and/or at increased temperature.

15. Method according to claim 14, **characterized in that** exhaust gas from a combustion process, preferably from a coal fired power plant, a waste incineration plant or a cement rotary kiln, is used to provide the increased CO₂ pressure for carbonation.
